(19) Europäisches Patentamt
European Patent Office
Office européen des brevets

(11) EP 1 339 788 B1

(12) **EUROPEAN PATENT SPECIFICATION**

(45) Date of publication and mention of the grant of the patent:
**04.04.2007 Bulletin 2007/14**

(21) Application number: **01999608.1**

(22) Date of filing: **03.12.2001**

(51) Int Cl.:
***C08L 23/16*** *(2006.01)*

(86) International application number:
**PCT/NL2001/000875**

(87) International publication number:
**WO 2002/046301 (13.06.2002 Gazette 2002/24)**

(54) **POLYMER COMPOSITION, PROCESS FOR THE PREPARATION OF THE POLYMER COMPOSITION AND MOULDED PARTS THEREOF**

POLYMERZUSAMMENSETZUNG, VERFAHREN ZU IHRER HERSTELLUNG UND FORMTEILE DARAUS

COMPOSITION POLYMERE, PROCESSUS DE PREPARATION DE CETTE COMPOSITION ET ELEMENTS MOULES DE CETTE COMPOSITION

(84) Designated Contracting States:
**AT BE CH CY DE DK ES FI FR GB GR IE IT LI LU MC NL PT SE TR**

(30) Priority: **05.12.2000 NL 1016799**

(43) Date of publication of application:
**03.09.2003 Bulletin 2003/36**

(73) Proprietor: **DSM IP Assets B.V.**
**6411 TE Heerlen (NL)**

(72) Inventors:
- **NOORDERMEER, Jacobus, Wilhelmus, Maria**
**NL-6118 BV Nieuwstadt (NL)**
- **DEES, Michiel, Jan**
**NL-6241 DG Bunde (NL)**

(74) Representative: **Dorrestijn, Antoon**
**DSM Intellectual Property**
**Office Geleen**
**P.O. Box 9**
**6160 MA Geleen (NL)**

(56) References cited:
**EP-A- 1 113 028**
**US-A- 5 710 218**
**US-A- 5 728 911**
**US-A- 5 804 661**
**US-A- 5 973 017**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The invention relates to a polymer composition containing a copolymer, which copolymer contains monomer units of ethylene, an α-olefin and a non-conjugated diene. The invention also relates to a process for the preparation of the polymer composition and moulded parts thereof.

Such a polymer composition is known, for example, from "Rubber Technology Handbook W. Hofmann"; Carl Hanser Verlag (1989), pages 93-100. From this reference a polymer composition is known that contains a copolymer of ethylene, propylene and a non-conjugated diene, hereinafter referred to as EPDM. EPDM is generally mixed further with for example plasticizers, reinforcing fillers and curing agents to obtain an EPDM compound. For processing into a moulded article it is important for the EPDM compound to possess good processing properties, such as for example good flow. For use in a moulded article it is important for the rubber formed from a compound to possess good physical and mechanical properties, for example a high elongation, a high tensile strength and a low compression set.

US5728911 describes a copolymer having a reduced specific viscosity less than 0.6 and a process for its preparation in which ethylene, at least one other 1-alkene and, optionally, an aliphatic or alicyclic polyunsaturated monomer are polymerized in the presence of a catalyst system containing (1) a compound of vanadium, (2) at least one alkyl aluminum halide, (3) an .alpha.-halo, ketoaromatic promoter and (4) a chain transfer agent in which the molar ratio of alkyl groups of the alkyl aluminum halide to halogen atoms is at least 1.5.

One skilled in the art has several options, known from the literature and having a theoretical basis, that can be used to control the processing properties, the physical properties and the mechanical properties. A problem then encountered, however, is that improvement of one of the properties will result in deterioration of one of the other properties.

An EPDM compound, for example, has a good flow if the EPDM has a low weight-average molecular weight, but the rubber formed from this has inferior mechanical properties. Conversely, the rubber formed from the EPDM compound has good mechanical properties if the EPDM has a high weight-average molecular weight, but in that case the EPDM compound has an inferior flow. An EPDM compound further has a good flow if the EPDM has a broad or even bimodal molecular weight distribution or if the EPDM compound contains an EPDM with a high weight-average molecular weight and an EPDM with a low weight-average molecular weight. However, the rubber formed from it again has inferior mechanical properties. There are also other ways to influence the processing properties, the physical properties and the mechanical properties, for example by changing further molecular properties of the EPDM or EPDM compound. In general, however, it continues to be a drawback that if one property is improved another property deteriorates.

The aim of the invention is to provide a polymer composition that contains a copolymer, which copolymer contains monomer units of ethylene, an α-olefin and a non-conjugated diene, which polymer composition has good processing properties as well as good physical and mechanical properties.

Surprisingly, this aim is achieved in that the polymer composition contains at least copolymer A and copolymer B, which copolymers contain monomer units of ethylene, an α-olefin and a non-conjugated diene, the weight-average molecular weight of copolymer A being higher than that of copolymer B and at least copolymer A satisfying the relationship:

$$Mw/Mn < -0.066.\ \Delta\delta + a \quad (1).$$

where

- Mw is the weight-average molecular weight of the copolymer,
- Mn is the number-average molecular weight of the polymer,
- a = 4.8
- Δδ, expressed in degrees, is the difference between the loss angles, determined at 0.1 rad/s and 100 rad/s, from the quotient of G"/ G', where G' is the storage modulus and G" the loss modulus, measured using mechanical, dynamic spectrometry.

Although from Keltec, Technical Information Bulletin, March 1998 pages 1-7, an EPDM is known that satisfies formula (1) and that in itself has both fairly good mechanic and fairly good processing properties, it is most surprising that a blend of such an EPDM with an EPDM having a lower weight-average molecular weight should possess both further improved processing properties and further improved mechanical and physical properties, while this is not the case when two random EPDMs are blended.

Yet another advantage of the polymer composition according to the invention is that the polymer composition has very good compounding properties. This is apparent in particular from a good carbon black dispersion achieved during mixing and kneading of the polymer composition to form a compound. It has, surprisingly, been found that blending

of copolymer A with copolymer B and carbon black gives rise to a synergistic effect that could certainly not be predicted on the basis of the carbon black dispersions of the individual copolymers A and B. It has moreover been found that less mixing energy is needed for dispersion of carbon black in the polymer composition.

In formula 1 preferably a = 4.5, more preferably a = 4.3, and more preferably a = 4.1. $\Delta\delta$ from formula 1 and the method for measuring it has been introduced by H.C.Booij, Kautschuk Gummi Kunststoffe 44, 128 (1991).

Copolymers A and B in the composition according to the invention preferably contain monomer units of ethylene and an $\alpha$-olefin in a molar ratio of between 85115 (mol/mol) and 20/80 (mol/mol). More preferably the ratio lies between 75/25 and 40/60, even more preferably between 65/35 and 45/55.

The $\alpha$-olefin for example contains 3 - 20 C atoms. Preferably the $\alpha$-olefin contains 3 -10 C atoms. Examples of very suitable $\alpha$-olefins are propylene, butene-1, pentene-1, 4-methylpentene-1, hexene-1 and octene-1. Most preferably the $\alpha$-olefin is propylene.

Copolymer A in the polymer composition according to the invention for example has a weight-average molecular weight (Mw) of between 200,000 and 500,000. Preferably copolymer A has an Mw of between 250,000 and 450,000. Even more preferably copolymer A has an Mw of between 300,000 and 400,000.

The molecular weight distribution (Mw/Mn) of copolymer A may for instance lie between 2 and 10. Preferably Mw/Mn lies between 2 and 4, more preferably between 2.5 and 3.8.

Besides monomer units of ethylene and the $\alpha$-olefin, copolymer A according to the invention also contains one or more monomer units derived from a polyene. Preferably copolymer A contains 0.1-4 mole% non-conjugated polyene of which preferably 0.01-1 mole% is made up of one or more polyenes that have at least two double carbon-carbon bonds that can be copolymerized using a Ziegler-Natta catalyst, the remainder being made up of one or more polyenes that have one double carbon-carbon bond that can be copolymerized using a Ziegler-Natta catalyst. More preferably copolymer A contains 0.03 - 0.5 mole% polyene having at least two double carbon-carbon bonds that can be copolymerized using a Ziegler-Natta catalyst. Even more preferably copolymer A contains 0.1- 0.3 mole% polyene having at least two double carbon-carbon bonds that can be copolymerized using a Ziegler-Natta catalyst. Examples of non-conjugated polyenes having at least two unsaturated carbon-carbon bonds that can both be copolymerized using a Ziegler-Natta catalyst are 1,4-pentadiene, vinyl norbornene (VNB), 1,5-hexadiene and dicyclopentadiene (DCPD). Copolymer A preferably contains vinyl norbornene as polyene having at least two double carbon-carbon bonds that can be copolymerized using a Ziegler-Natta catalyst.

Preferably copolymer A contains 1.5-2.8 mole% non-conjugated diene having one double carbon-carbon bond that can be copolymerized using a Ziegler-Natta catalyst, more preferably copolymer A contains 1.7-2.4 mole% non-conjugated diene having one double carbon-carbon bond that can be copolymerized using a Ziegler-Natta catalyst. Examples of suitable polyenes having one double bond that can be copolymerized using a Ziegler-Natta catalyst - are described in "Ziegler-Natta catalyst and polymerizations" by J. Boor, Jr., Academic Press 1979, chapter 19. Examples are ethylidene norbornene and 1,4-hexadiene. Copolymer A according to the invention preferably contains ethylene norbornene (ENB) as non-conjugated diene having one double carbon-carbon bond that can be copolymerized using a Ziegler-Natta catalyst.

Copolymer B in the polymer composition according to the invention for example has a weight-average molecular weight (Mw) of between 40,000 and 200,000. Preferably copolymer B has an Mw of between 100,000 and 200,000, more preferably of between 125,000 and 175.000. The molecular weight distribution (Mw/Mn) of copolymer B may for example lie between 2 and 10. Preferably the Mw/Mn lies between 2 and 5, more preferably between 2.5 and 3.8.

Besides monomer units of ethylene and the $\alpha$-olefin, copolymer B also contains one or more monomer units derived from a polyene. Examples of suitable polyenes are those that contain a double C-C bond in the molecule that can be polymerized using a Ziegler-Natta catalyst in addition to at least another double C-C bond, which is used in subsequent curing of the copolymer. Examples of suitable polyenes are described in "Ziegler-Natta catalyst and polymerizations" by J. Boor, Jr., Academic Press 1979, chapter 19. Examples are ethylidene norbornene and 1,4-hexadiene. Preferably copolymer B contains ethylidene norbornene as non-conjugated polyene. Preferably copolymer B contains 0.5 -6 mole% of a non-conjugated polyene. More preferably copolymer B contains between 1.5 and 5 mole% non-conjugated polyene, even more preferably between 2 and 4 mole% non-conjugated polyene.

Besides the above-mentioned polyene copolymer B may for example also contain one or more polyenes that have at least two double carbon-carbon bonds that can be copolymerized using a Ziegler-Natta catalyst. Examples are 1,4-pentadiene, vinyl norbornene (VNB), 1,5-hexadiene and dicyclopentadiene (DCPD). Copolymer B preferably contains vinyl norbornene. For example copolymer B contains 0.02 - 2 mole% polyene having at least two double carbon-carbon bonds that can be copolymerized using a Ziegler-Natta catalyst. Preferably copolymer B contains 0.06 -1 mole% polyene having at least two double carbon-carbon bonds that can be copolymerized using a Ziegler-Natta catalyst. Even more preferably copolymer B contains 0.2- 0.6 mole% polyene having at least two double carbon-carbon bonds that can be copolymerized using a Ziegler-Natta catalyst.

Copolymer A and copolymer B preferably have a crystallinity of at most 5% at room temperature and higher temperatures, measured by means of DSC (differential scanning calorimetry).

The invention also relates to a polymer composition in which at least copolymer A has been obtained by polymerization using a Ziegler-Natta catalyst containing a transition metal from group 3, 4, 5 or 6, an organometal from group 1, 2, 12 or 13 and a compound according to formula 2;

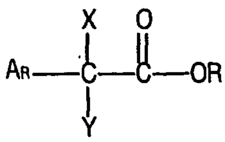

(formula 2)

where

X = a chlorine atom
Y = an H atom, a chlorine atom or phenyl
R = H, an alkyl group with 1-30 C atoms or an aromatic group with 6-30 C atoms
Ar = an aromatic group with 6-30 C atoms

The aromatic group (Ar) in the compounds according to formula 2 may be substituted. Examples of such substituents are alkyl, substituted alkyl, alkoxy, halogen, amino, cyanide, nitro, thiol and carboxyl groups. A phenyl or p-tolyl group is preferred.
R is preferably a methyl, ethyl, propyl, isopropyl, butyl, isobutyl, hexyl, octyl, phenyl or tolyl group. More preferably R is an ethyl group.

Y is preferably a chlorine atom or a phenyl group. Preferably use is made of monochlorodiphenyl acetic acid esters or dichlorophenyl acetic acid esters according to formula 2.

The catalyst system used in the synthesis of at least copolymer A comprises a transition metal compound and an organometal compound. In addition, other components may be present, such as Lewis bases. Examples of suitable Lewis bases are: amines, pyridines, ethers and esters:

The transition metal compound contains a metal chosen from the groups 3, 4, 5 or 6 of the Periodic System of the Elements. More than one (1) transition metal compound may be present in the catalyst system. Preference is given to a metal from group 5 of the Periodic System of the Elements; even more preference is given to vanadium. Examples of suitable vanadium compounds are $VOCl_3$, $VC1_4$, $VCl_3$, $VCl_3$.3THF (where THF is a tetrahydrofuran group), $V(acac)_3$, (where acac is an acetyl acetonate group), $VO(acac)_2$, $C_{P2}VCl$, (where Cp is a substituted or unsubstituted cyclopentadienyl, indenyl, tetrahydroindenyl or fluorenyl group), $VOCl_2OR'$ (where R' is a substituted or unsubstituted alkyl group with 1-20 C atoms).

The organometal compound contains a metal chosen from the groups 1, 2, 12, or 13 of the Periodic System of the Elements. More than one (1) organometal compound may be present in the catalyst system. Preferably at least one of the organometal compounds contains aluminium. This organoaluminium compound preferably satisfies the formula $R'_{3-n}AlCl_n$, where 0 <= n <= 2 and R' is a substituted or unsubstituted alkyl group with 1-20 C atoms. Examples of suitable organoaluminium compounds are triethyl aluminium, triisobutyl aluminium, trioctyl aluminium, methyl aluminoxane, diethylaluminium ethoxide, diisobutyl aluminium chloride, dimethyl aluminium chloride, diethyl aluminium chloride, methyl aluminium dichloride, ethyl aluminium dichloride, isobutyl aluminium dichloride, isobutyl aluminium sesquichloride, ethyl aluminium sesquichloride, etc. Diethyl aluminium chloride and ethyl aluminium sesquichloride are preferred.

The compound according to formula 2 and the other components of the catalyst system can be added to a polymerization reactor both in dissolved condition (preferably a solvent being chosen that is also used in the corresponding liquid phase polymerization) and in a form in which at least one of the components of the catalyst system is applied to a carrier. One skilled in the art is familiar with various techniques that are known in themselves. As carrier material use can for example be made of: silica, alumina, zeolite, $MgCl_2$, etc.

The polymerization reaction is for example carried out at a temperature between -40 and 200°C, preferably at a temperature between 10 and 80°C. The pressure is for example 3-30 MPa. Preferably the process is carried out continuously, but it can also be carried out semi-continuously or batchwise.

The residence time may vary from a few seconds to a few hours. In general the residence time will be chosen between a few minutes and an hour.

The polymerization may for example be carried out in a solvent that is inert relative to the catalyst system, for example one or more saturated aliphatic hydrocarbons, such as butane, pentane, hexane, heptane, pentamethylheptane or petroleum fractions; aromatic hydrocarbons, for example benzene or toluene, or halogenated aliphatic or aromatic hydrocarbons, for example tetrachloroethylene. Use can be made of such a temperature and pressure that one or more

of the monomers used, in particular the α-olefin, for example propylene, is liquid and is present in such a large quantity that it acts as solvent. In that case no other solvent is needed. The polymerization can be carried out both in a polymerization reactor filled with gas and liquid and in a reactor filled entirely with liquid. Copolymer B can also be obtained using the process described above.

Copolymer A and copolymer B are blended after polymerization.

Besides copolymer A and copolymer B the polymer composition may contain a plasticizer, a reinforcing filler, curing agents and other customary rubber compounding additives. Examples of suitable plasticizers are mineral oils, paraffinic oils or naphthenic oils. Examples of reinforcing fillers are carbon black and silica particles. Examples of suitable curing agents are sulphur, sulphur containing compounds and peroxides. Examples of other customary additives are stearic acid and calcium soaps of fatty acids.

Such a polymer composition can be prepared by blending and kneading the copolymers A and B or a blend of the copolymers A and B and the other above-mentioned components, for example in a continuous or a discontinuous kneader such as for example a Banbury mixer.

The present invention also relates to moulded articles manufactured wholly or partly on the basis of the polymer composition according to the invention. In these the copolymers A and/or B may be cured.

The polymer composition according to the invention is suitable for many different applications, for example for the manufacture of profiles with a foam structure, hoses, seal profiles, sealing rings such as for example O-rings and roofing film.

The invention will be elucidated further on the basis of the following examples and comparative experiments, without being limited to these.

To evaluate the processing properties and the mechanical properties of the polymer compositions the following tests were carried out:

- The carbon black dispersion was determined, the mixing times at 90 sec and 180 sec being plotted versus volume resistance (VR) according to ASTM D 257; (k Ω.cm)
- The compression set (CS) was measured according to ISO 815 type B at 100°C for 24 hours
- The copolymers were characterized on the basis of their Mw and Mn, which were calculated from the molecular weight distribution of the copolymers, which can be determined by means of Gel Permeation Chromatography (GPC) according to the method described below;

The following equipment and experimental conditions were used for this SEC-DV Size Exclusion Chromatography and Differential Viscosimetry:

Equipment:

- Waters M150C Gel Permeation Chromatograph (GPC) Chromatography.
- Internally heated differential refractive index DRI detector (Waters)
- External differential viscometer DV detector (Viscotek) connected via a heated transfer line
- 0.300 ml injection volume

    Columns: 4 TSK GMHxL-HT mixed bed columns
    Solvent: 1,2,4-trichlorobenzene stabilized with DBPC
    Software: Viscotek TriSEC version 2.7
    Calibration: Universal calibration with linear polyethylene (PE) standard molecular weight 0.4-4000 kg/mol

- Mark-Houwink PE a: 0.725

    Log K: -3.391

Sample preparation:

- Concentration 0.01-0.15 mg/ml
- Dissolving for 4 hours at 150 °C under nitrogen

Then filtration using a regenerated cellulose filter at 150°C. This method is described further in great detail in Modern Size-Exclusion Liquid Chromatography by W.W.Yau, J.J.Kirkland, and D.D. Bly, John Wiley & Sons, N.Y. (1979).

• Copolymer compositions as used in the examples;

| | Mw | Mw/Mn | Δδ | a | Mole% ethylene | Mole% ENB | Mole% VNB |
|---|---|---|---|---|---|---|---|
| EPDM1 | 225,000 | 3.0 | 36 | 5.4 | 59.5 | 1.4 | |
| EPDM2 | 175,000 | 2.9 | 36 | 5.3 | 59.5 | 1.4 | |
| EPDM A | 290,000 | 2.9 | 16 | 4.0 | 67.3 | 1.7 | 0.15 |
| EPDM B | 150,000 | 2.7 | 16 | 3.8 | 65.4 | 1.7 | 0.30 |

Comparative experiment 1

100 parts of EPDM1 together with 80 parts of paraffinic oil, 30 parts of $CaCO_3$ and 70 parts of carbon black were mixed and kneaded for 180 seconds in a Banbury mixer. The compound was then dumped onto a roll at 50°C upon which 8 parts of a standard curing system were added. Then further mixing took place for 1 minute.
The resulting compound was cured in a press at 180°C for 12 minutes. The compression set was measured as described above, at 100°C for 24 hours. The volume resistance (VR) was measured at 90 sec and 180 sec.
The results are presented in Table1.

Comparative experiment 2

Similar to comparative experiment 1, but instead of 100 parts of EPDM1 a blend of 50 parts of EPDM1 and 50 parts of EPDM2 was used.
Of the cured compound based on EPDM1 and EPDM2 the compression set was measured. The volume resistance was measured at 90 sec and 180 sec.
The results are presented in Table1.

Comparative experiment 3

Similar to comparative experiment 1, but instead of 100 parts of EPDM1 use was made of 100 parts of EPDM A. Of the cured compound based on EPDM A the compression set was measured. The volume resistance was measured at 90 sec and 180 sec.
The results are presented in Table 1.

Example 1

Similar to comparative experiment 1, but instead of 100 parts of EPDM1 use was made of a blend of 50 parts of EPDM copolymer A and 50 parts of EPDM copolymer B. Of the cured compound based on the EPDM copolymers A and B the compression set was measured. The volume resistance was measured at 90 and 180 sec. The results are presented in Table1.

| Table 1 | CS | VR 90 sec | VR 180 sec |
|---|---|---|---|
| Comparative Experiment 1 EPDM1 | 30 | 12,500 | 12,900 |
| Comparative Experiment 2 EPDM1+EPDM2 | 32 | 4360 | 29,700 |
| Comparative Experiment 3 | | 26,300 | 39,500 |

(continued)

| Table 1 | CS | VR 90 sec | VR 180 sec |
|---|---|---|---|
| EPDM A | | | |
| Example 1 . EPDM A + EPDM B | 25 | 28,100 | 74,500 |

From Table 1 it is evident that the carbon black dispersion of a polymer composition on the basis of two randomly selected EPDM copolymers 1 + 2 (comparative example 2) after 90 sec mixing is inferior to that of the individual EPDM copolymer 1 (comparative experiment 1). At a longer mixing time, after 180 sec, the carbon black dispersion of the blend of EPDM 1 and EPDM 2 is better. (comparative experiment 2).

The polymer composition on the basis of EPDM copolymer A (comparative example 3) does have a better carbon black dispersion than the EPDM copolymer 1 (comparative example 1) or a blend of EPDM copolymers 1 and 2 (comparative example 2), but when EPDM copolymer A is blended with EPDM copolymer B (example 1) a good carbon black dispersion is obtained already at short mixing times. After a mixing time of 180 sec an excellent carbon black dispersion is obtained. Moreover, the compression set of the blend is also found to improve substantially.

Resuming: if randomly selected EPDM's having different molecular weight, are mixed, than the carbon black dispersion is inferior to that of the single EPDM's after a relatively short mixing cycle.
However, if two EPDM's are mixed, according to the invention, at least the EPDM of the higher molecular weight full fills to the conditions of formula 1, than on the contrary a strongly improved dispersion is obtained, not only after short mixing times, but also after longer mixing times. Moreover a very good value for the compression set is obtained.

## Claims

1. Polymer composition containing a copolymer, which copolymer contains monomer units of ethylene, an α-olefin and a non-conjugated diene,
**characterized in that** the polymer composition contains at least copolymer A and copolymer B, which copolymers contain monomer units of ethylene, an α-olefin and a non-conjugated diene, the weight-average molecular weight of copolymer A being higher than that of copolymer B and at least copolymer A satisfying the relationship:

$$Mw/Mn < -0{,}066.\ \Delta\delta + a \quad (1)$$

where

Mw is the weight-average molecular weight of the copolymer,
Mn is the number-average molecular weight of the polymer,
a = 4.8
Δδ, expressed in degrees, is the difference between the loss angles, determined at 0.1 rad/s and 100 rad/s, from the quotient of G"/G', where G' is the storage modulus and G" the loss modulus, measured by means of mechanical, dynamic spectrometry and wherein copolymer A comprises 0.01-1 mole% of vinyl norbornene.

2. Polymer composition according to claim 1, **characterized in that** a = 4.5.

3. Polymer composition according to either of claims 1-2, **characterized in that** a = 4.3.

4. Polymer composition according to any one of claims 1-6, **characterized in that** copolymer A has an Mw/Mn that is between 2 and 4.

5. Polymer composition according to claim 1, **characterized in that** copolymer B has an Mw/Mn that is between 2 and 5.

6. Polymer composition according to any one of claims 1-5, **characterized in that** copolymer A has a weight average molecular weight of between 200,000-500,000 and copolymer B has a weight average molecular weight of between 40,000-200,000.

7. Polymer composition according to any one of claims 1-6. **characterized in that** at least copolymer A has been obtained by polymerization with a Ziegler-Natta catalyst containing a transition metal from group 3, 4, 5 or 6, an organometal from group 1, 2, 12 or 13 and a compound according to formula 2;

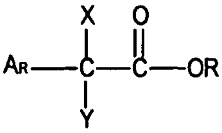

(formula 2)

where

X = a chlorine atom
Y = a H atom or a chlorine atom, phenyl
R = H, an alkyl group with 1-30 C atoms or an aromatic group with 6-30 C atoms
Ar = an aromatic group with 6-30 C atoms.

8. Polymer composition according to claim 7, **characterized in that** the transition metal is vanadium.

9. Polymer composition according to claim 8, **characterized in that** the organometal compound has the formula $R'_{3-n}$ $-Al-Cl_n$, with 0 <= n<= 2, and where R' is a substituted or un-substituted alkyl group with 1-20 C atoms.

10. Polymer composition according to claim 10, **characterized in that** the compound according to formula 2 is chosen from monochlorodiphenyl acetic acid esters or dichlorophenyl acetic acid esters.

11. Moulded article, made wholly or partly from a polymer composition according to any one of claims 1-10.

12. Moulded article according to claim 11, **characterized in that** copolymer A and/or copolymer B are cured.

**Patentansprüche**

1. Polymerzusammensetzung, enthaltend ein Copolymer, das Monomereinheiten von Ethylen, einem α-Olefin und einem nichtkonjugierten Dien enthält, **dadurch gekennzeichnet, daß** die Polymerzusammensetzung mindestens Copolymer A und Copolymer B, die Monomereinheiten von Ethylen, einem α-Olefin und einem nichtkonjugierten Dien enthalten, enthält, wobei das gewichtsmittlere Molekulargewicht von Copolymer A größer ist als das von Copolymer B und zumindest Copolymer A die Beziehung:

$$Mw/Mn < -0{,}066.\Delta\delta + a \quad (1)$$

erfüllt, wobei

Mw das gewichtsmittlere Molekulargewicht des Copolymers ist,
Mn das zahlenmittlere Molekulargewicht des Polymers ist,
a = 4,8, _
Δδ, ausgedrückt in Grad, die Differenz zwischen den bei 0,1 rad/s und 100 rad/s aus dem Quotienten G"/G', worin G' der Speichermodul und G" der Verlustmodul ist, gemessen durch mechanischdynamische Spektrometrie, bestimmten Verlustwinkeln ist, und Copolymer A 0,01-1 Mol-% Vinylnorbornen enthält.

2. Polymerzusammensetzung nach Anspruch 1, **dadurch gekennzeichnet, daß** a = 4,5.

3. Polymerzusammensetzung nach Anspruch 1 oder 2, **dadurch gekennzeichnet, daß** a = 4,3.

4. Polymerzusammensetzung nach einem der Ansprüche 1-3, **dadurch gekennzeichnet, daß** Copolymer A einen

Mw/Mn-Wert zwischen 2 und 4 aufweist.

5. Polymerzusammensetzung nach Anspruch 1, **dadurch gekennzeichnet, daß** Copolymer B einen Mw/Mn-Wert zwischen 2 und 5 aufweist.

6. Polymerzusammensetzung nach einem der Ansprüche 1-5, **dadurch gekennzeichnet, daß** Copolymer A ein gewichtsmittleres Molekulargewicht zwischen 200.000 und 500.000 aufweist und Copolymer B ein gewichtsmittleres Molekulargewicht zwischen 40.000 und 200.000 aufweist.

7. Polymerzusammensetzung nach einem der Ansprüche 1-6, **dadurch gekennzeichnet, daß** zumindest Copolymer A durch Polymerisation mit einem Ziegler-Natta-Katalysator, der ein Übergangsmetall aus der Gruppe 3, 4, 5 oder 6, eine metallorganische Verbindung aus der Gruppe 1, 2, 12 oder 13 und eine Verbindung der Formel 2

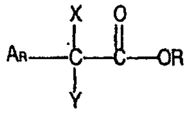

(Formel 2)

worin

X = ein Chloratom
Y = ein H-Atom oder ein Chloratom, Phenyl
R = H, eine Alkylgruppe mit 1-30 C-Atomen oder eine aromatische Gruppe mit 6-30 C-Atomen
Ar = eine aromatische Gruppe mit 6-30 C-Atomen,
enthält, erhalten worden ist.

8. Polymerzusammensetzung nach Anspruch 7, **dadurch gekennzeichnet, daß** es sich bei dem Übergangsmetall um Vanadium handelt.

9. Polymerzusammensetzung nach Anspruch 8, **dadurch gekennzeichnet, daß** die metallorganische Verbindung die Formel $R'_{3-n}$-Al-$Cl_n$, worin 0<=n<=2 und R' für eine substituierte oder unsubstituierte Alkylgruppe mit 1-20 C-Atomen steht, aufweist.

10. Polymerzusammensetzung nach Anspruch 10, **dadurch gekennzeichnet, daß** die Verbindung der Formel 2 unter Monochlordiphenylessigsäureestern oder Dichlorphenylessigsäureestern ausgewählt ist.

11. Formteil, ganz oder teilweise hergestellt aus einer Polymerzusammensetzung nach einem der Ansprüche 1-10.

12. Formteil nach Anspruch 11, **dadurch gekennzeichnet, daß** Copolymer A und/oder Copolymer B gehärtet sind.

**Revendications**

1. Composition de polymère contenant un copolymère, ce copolymère contenant des motifs monomères d'éthylène, d'une $\alpha$-oléfine et d'un diène non conjugué, **caractérisée en ce que** la composition de polymère contient au moins un copolymère A et un copolymère B, ces copolymères contenant des motifs monomères d'éthylène, d'une $\alpha$-oléfine et d'un diène non conjugué, la masse moléculaire moyenne en poids du copolymère A étant supérieure à celle du copolymère B, et au moins le copolymère A satisfaisant à la relation :

$$Mp/Mn < -0,066 \cdot \Delta\delta + a \quad (1)$$

dans laquelle

Mp est la masse moléculaire moyenne en poids du copolymère,
Mn est la masse moléculaire moyenne en nombre du polymère,
a = 4,8
$\Delta\delta$, exprimé en degrés, est la différence entre les angles de perte, déterminés à 0,1 rad/s et 100 rad/s, à partir du quotient de G"/G', où G' est le module de conservation et G" le module de perte, mesuré par spectrométrie mécanique, dynamique, et dans laquelle le copolymère A comprend 0,01-1 % en moles de vinylnorbornène.

2. Composition de polymère selon la revendication 1, **caractérisée en ce que** a = 4,5.

3. Composition de polymère selon l'une quelconque des revendications 1-2, **caractérisée en ce que** a = 4,3.

4. Composition de polymère selon l'une quelconque des revendications 1-6, **caractérisée en ce que** le copolymère A présente une Mp/Mn qui est comprise entre 2 et 4.

5. Composition de polymère selon la revendication 1, **caractérisée en ce que** le copolymère B présente une Mp/Mn qui est comprise entre 2 et 5.

6. Composition de polymère selon l'une quelconque des revendications 1-5, **caractérisée en ce que** le copolymère A possède une masse moléculaire moyenne en poids comprise entre 200 000 et 500 000 et le copolymère B possède une masse moléculaire moyenne en poids comprise entre 40 000 et 200 000.

7. Composition de polymère selon l'une quelconque des revendications 1-6, **caractérisée en ce qu'**au moins le copolymère A a été obtenu par polymérisation avec un catalyseur de Ziegler-Natta contenant un métal de transition du groupe 3, 4, 5 ou 6, un organométal du groupe 1, 2, 12 ou 13 et un composé répondant à la formule 2 :

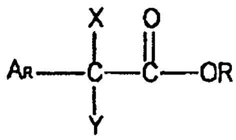

(formule 2)

dans laquelle

X = un atome de chlore
Y = un atome H ou un atome de chlore, un groupe phényle
R = H, un groupe alkyle comportant 1-30 atomes de C ou un groupe aromatique comportant 6-30 atomes de C
Ar = un groupe aromatique comportant 6-30 atomes de C.

8. Composition de polymère selon la revendication 7, **caractérisée en ce que** le métal de transition est le vanadium.

9. Composition de polymère selon la revendication 8, **caractérisée en ce que** le composé organométallique a pour formule $R'_{3-n}$-Al-$Cl_n$, avec $0 \leq n \leq 2$, et où R' est un groupe alkyle substitué ou non substitué comportant 1-20 atomes de C.

10. Composition de polymère selon la revendication 10, **caractérisée en ce que** le composé répondant à la formule 2 est choisi parmi les esters monochloro-diphényliques d'acide acétique ou les esters di-chlorophényliques d'acide acétique.

11. Article moulé, fabriqué en totalité ou en partie à partir d'une composition de polymère selon l'une quelconque des revendications 1-10.

12. Article moulé selon la revendication 11, **caractérisé en ce que** le copolymère A et/ou le copolymère B sont durcis.